# EUROPÄISCHE PATENTSCHRIFT

(11) **EP 1 508 461 B1**
(45) Veröffentlichungstag und Bekanntmachung des Hinweises auf die Patenterteilung: **28.06.2006**
(21) Anmeldenummer: 04103655.9
(22) Anmeldetag: 29.07.2004
(51) Int. Cl.: B60G 17/04

(54) **Hydropneumatische Federungseinrichtung**
Hydopneumatic suspension
Suspension hydropneumatique

(30) Priorität: 16.08.2003 DE 10337601
(43) Veröffentlichungstag der Anmeldung: 23.02.2005
(73) Patentinhaber: DEERE & COMPANY, Moline, Illinois 61265-8098 (US)
(72) Erfinder: Bauer, Wolfgang, 67098 Bad Dürkheim (DE); Schwegler, Heinz, 68809 Neulussheim (DE)
(74) Vertreter: Holst, Sönke

(56) Entgegenhaltungen:
- DE-A- 4 120 758
- DE-A- 10 107 631
- DE-A- 19 719 076
- DE-A- 19 719 077

## Beschreibung

Die Erfindung betrifft eine hydropneumatische Federungseinrichtung mit wenigstens einem hydraulischen Federungszylinder, dessen Zylinderraum und Ringraum jeweils mit wenigstens einem Druckspeicher in Verbindung stehen und mittels Ventilanordnungen wahlweise mit einer Druckquelle und einem Tank verbindbar sind.

Die Federungseinrichtung soll bevorzugt bei gefederten Radaufhängungen von Fahrzeugen, insbesondere von landwirtschaftliche oder industriellen Fahrzeugen, angewendet werden. Bei der Radaufhängung kann es sich um eine Einzelradaufhängung oder um die gefederte Aufhängung einer Fahrzeugachse handeln. Der wenigstens eine Federungszylinder wird zwischen Fahrzeugaufbau und Rad bzw. Fahrzeugachse angeordnet.

Die Auslegung einer hydropneumatischen Federung ist insbesondere bei landwirtschaftlichen oder industriellen Arbeitsmaschinen, wie beispielsweise Traktoren, eine besondere Herausforderung, weil hier extreme Achslastvariationen möglich sind. Die Achslastbandbreite übersteigt meist das bei Membranspeichern mögliche Druckverhältnis. Um den Arbeitsbereich der Druckspeicher einhalten zu können, wird daher das System vorgespannt. Diese Vorspannung wirkt wie eine zusätzliche Achslast, wodurch das Verhältnis von minimaler zu maximaler Achslast verringert werden kann.

Die Vorspannung des Systems erfolgt selten über eine mechanische Vorspannung, bei der dann auch ein einfach wirkender Zylinder eingesetzt werden kann. Üblicherweise kommt ein doppelt wirkender Hydraulikzylinder zum Einsatz, bei dem die Ringraumseite über einen Druckspeicher mit einem bestimmten Druck vorgespannt wird.

Der auf der Ringraumseite eingestellte Druck kann entweder dem maximalen Systemdruck entsprechen (DE-A-43 08 460) oder der Druck wird über einen Druckregler auf einen bestimmten vorgewählten Wert eingestellt (DE-C-42 42 448). Beiden Methoden ist, wie jedem hydropneumatischen System, zueigen, dass die Federrate gemäß einer gegebenen Funktion im Wesentlichen quadratisch von der Achslast abhängt. Für eine konstante Aufbaueigenfrequenz wäre hingegen eine lineare Abhängigkeit ideal.

Um einer praxisgerechten Abhängigkeit näher zu kommen, wurde daher vorgeschlagen (DE-A-197 19 076 und DE-A-197 19 077) in der Ringraumzuleitung ein hydraulisch betätigtes Druckregelventil vorzusehen, dessen Regelfederkraft sich in Abhängigkeit des Drucks in der Zylinderraumzuleitung einstellt. Damit soll der Druck im Ringraum in Abhängigkeit vom Druck im Zylinderraum des Hydraulikzylinders gesteuert werden, wobei bei niedrigen Belastungen die Zusatzbelastung im Ringraum maximal ist und bei höheren Belastungen stetig bis auf einen Minimalwert verringert wird. Hierdurch soll u. a. der Fahrkomfort verbessert werden.

In DE-A-41 20 758 ist eine hydropneumatische Fahrzeugfederung der eingangs genannten Art beschrieben, bei der zur Anpassung an große Achslastspreizungen in der Zuleitung zum Ringraum ein hydraulisch betätigtes Regelventil angeordnet ist, das einerseits dem Druck im Ringraum und andererseits dem Druck des Zylinderraums ausgesetzt ist, so dass der Druck im Ringraum in Abhängigkeit vom Druck im Zylinderraum geregelt wird. Hierdurch soll eine höhere Federsteifigkeit im Bereich kleinerer Achslasten erreichbar sein.

Eine bestimmte Achslast kann durch unterschiedliche Ballastierungszustände am Fahrzeug erzeugt werden. Um beispielsweise das Gewicht eines schweren Pfluges auszugleichen und eine ausreichende Last auf die Vorderachse zu bringen, lassen sich vorn am Traktor Ballastierungsgewichte montieren. Durch diese Ballastierung kann sich eine gleiche Achslast an der Vorderachse ergeben wie bei einem Traktor, der weder mit einem Pflug noch mit Frontgewichten ausgerüstet ist.

Bei den aus dem Stand der Technik bekannten Fahrzeugfederungen kann die Federsteifigkeit jedoch nicht auf unterschiedliche Ballastierungszustände und Arbeits- oder Fahrzustände des Fahrzeugs reagieren, d. h. die Federsteifigkeit ist unabhängig von diesen Zuständen und hängt lediglich von der jeweils herrschenden Achslast ab. Dies kann beispielsweise dazu führen, dass ein stark ballastierter Traktor bezüglich der Nickeigenfrequenz zu weich gefedert ist, während der unballastierte Traktor zu hart ist.

Die der Erfindung zugrunde liegende Aufgabe wird darin gesehen, ein hydropneumatische Federungseinrichtung der eingangs genannten Art anzugeben, durch welches die vorgenannten Probleme überwunden werden. Insbesondere soll einer gegebenen, unveränderlichen quadratischen Abhängigkeit der Federrate von der Achslast begegnet werden und die Federrate soll an Ballastierungszustände und Arbeits- oder Fahrzustände des Fahrzeugs anpassbar sein und nicht lediglich von der aktuellen Achslast abhängen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße hydropneumatische Federungseinrichtung enthält wenigstens einen hydraulischen Federungszylinder, insbesondere einen doppelt wirkenden Hydraulikzylinder, dessen Zylinderraum und Ringraum jeweils mit wenigstens einem Druckspeicher in Verbindung stehen. Der Federungszylinder kann beispielsweise zwischen dem Chassis eines Fahrzeugs und dessen Rad bzw. Achse angeordnet sein. Mittels Ventilanordnungen lassen sich der Zylinderraum und der Ringraum unabhängig voneinander mit einer Druckquelle und mit einem Tank verbinden. Diese Federungseinrichtung ist dadurch gekennzeichnet, dass die dem Ringraum zugeordnete Ventilanordnung wenigstens ein insbesondere in stromloser Stellung geschlossenes sitzdichtes erstes Magnetventil und ein in Serie hierzu angeordnetes elektrisch ansteuerbares der Druckeinstellung dienendes Proportionalventil aufweist.

Vorzugsweise kann der Ringraumdruck entweder direkt als Steuerdruck an das Proportionalventil angelegt oder durch Verwendung eines Sensors erfasst und zur Steuerung des Proportionalventils herangezogen werden. Zu diesem Zweck sieht eine bevorzugte Ausgestaltung der Erfindung vor, einen Drucksensor zur Erfassung des Ringraumdrucks und/oder einen Kraftsensor zur Erfassung der Achslast zu verwenden. Die Sensorsignale werden zur Ansteuerung des Proportionalventils herangezogen. Alternativ oder ergänzend hierzu ist es von besonderem Vorteil, das Proportionalventil hydraulisch in Abhängigkeit des Ringraumdrucks anzusteuern. Das Proportionalventil ist hierbei einerseits dem Druck seines ringraumseitigen Anschlusses und andererseits dem Druck seines tankseitigen Anschlusses ausgesetzt.

Das Magnetventil liegt vorzugsweise zwischen dem Ringraum und dem Proportionalventil. Es sorgt dafür, dass in seiner Schließstellung eine möglichst geringe Leckage aus der Ringraumseite zum Tank auftritt. In seiner Schließstellung ist ein Rückschlagventil wirksam. Geeignete Magnetventile mit extrem geringer Leckage werden beispielsweise als Modelle SV08-20 und SV08-22 durch die Fa. HydraForce, Lincolnshire, IL, USA angeboten.

Die Einstellung des Ringraumdrucks erfolgt über das Proportionalventil. Über den Steuerstrom des das Proportionalventil steuernden Magneten kann ein bestimmter Druck vorgewählt werden, welcher dann auf der Ringraumseite des Federkreises eingestellt wird. Die Einstellung des Steuerstromes kann beispielsweise durch eine Steuereinheit vorgenommen werden und aufgrund unterschiedlicher Parameter, wie Ballastierung, Fahrgeschwindigkeit und Einsatzbedingungen, erfolgen. Da die Federungseinrichtung in der Regel auch über eine Niveauregelung mit einem Positionsgeber verfügt, ist es auch möglich, die Stärke der über den Positionsgeber detektierten Stöße, welche vom Untergrund auf die Reifen übertragen werden, bei der Steuerung zu berücksichtigen.

Mit dieser Federungseinrichtung lässt sich die ringraumseitige Vorspannung der Achsfederung in weiten Grenzen verändern. Insbesondere lässt sich der Ringraumdruck und damit die Federungscharakteristik innerhalb gegebener physikalischer Grenzen beliebig einstellen, so dass einerseits einer festen quadratischen Abhängigkeit der Federrate von der Achslast begegnet werden und z. B. eine eher lineare Federcharakteristik eingestellt werden kann. Andererseits kann die erfindungsgemäße Federungseinrichtung durch geeignete elektrische Ansteuerung des Proportionalventils auf unterschiedliche Ballastierungszustände, Geschwindigkeiten und Einsatzbedingungen des Fahrzeugs reagieren. Die Federungseigenschaften lassen sich somit automatisch und auf optimale Weise individuell an unterschiedliche Fahr- und Arbeitseinsätze anpassen. Es wird hervorgehoben, dass zur Ansteuerung des Proportionalventils kein durch die Steuereinheit erfasstes Drucksensorsignal erforderlich ist, auch wenn bei besonderen Anwendungen die Verwendung eines Drucksensorsignals zweckmäßig sein kann.

Vorzugsweise enthält das erste Magnetventil in seiner geschlossenen (abgeschalteten, stromlosen) Stellung eine Rückschlagventilfunktion, die einen Flüssigkeitsabfluss vom Ringraum verhindert. Das sitzdichte Rückschlagventil sorgt in besonders wirkungsvoller Weise dafür, dass bei abgeschaltetem Proportionalventil eine Leckage aus dem Ringraumseite des Hydraulikzylinders zum Tank unterbleibt.

Es kann bei bestimmten Ventilanordnungen auch zweckmäßig sein, dass das erste Magnetventil in seiner geschlossenen (abgeschalteten) Stellung zwei Rückschlagventilfunktionen enthält, die einen Flüssigkeitsdurchfluss in beide Richtungen verhindert.

In vielen Anwendungsfällen ist es von besonderem Vorteil, zwischen dem ersten Magnetventil und dem Proportionalventil eine den Durchfluss begrenzende Blende anzuordnen. Die Blende ermöglicht eine kontrollierte Einstellung des Ringraumdruckes. Es ist jedoch auch möglich, den Ringraumdruck durch ein langsames Aufregeln des Proportionalventils kontrolliert einzustellen, so dass auf die Blende völlig verzichtet werden kann. Die Verwendung einer Blende kann jedoch dennoch im Zusammenhang mit einer Load-Sensing-Steuerung von Vorteil sein.

Als Blende wird im folgenden ein Strömungswiderstand angesehen, der auf unterschiedliche Weise ausgebildet sein kann, beispielsweise als lokale Verengungsstelle (Blende) oder als sich über einen längeren Strömungsweg erstreckende Verengung (Drossel).

Gemäß einer bevorzugten Ausgestaltung der Erfindung ist das Proportionalventil ein elektromagnetisch ansteuerbares Proportionaldruckregelventil, welches seinen ringraumseitigen Anschluss wahlweise mit dem Tank oder mit der Druckquelle verbindet. Geeignete Proportionaldruckregelventile werden beispielsweise als Modell TS98-31 durch die Fa. HydraForce, Lincolnshire, IL, USA angeboten.

Vorzugsweise verbindet das Proportionaldruckregelventil in stromloser Stellung seinen ringraumseitigen Anschluss mit seinem tankseitigen Anschluss (Tankstellung) und im erregten Zustand seinen druckquellenseitigen Anschluss mit dem ringraumseitigen Anschluss (Druckquellenstellung).

Des Weiteren ist es von Vorteil am Proportionaldruckregelventil eine Rückstellfeder vorzusehen, die das Proportionaldruckregelventil in seine Tankstellung drängt, so dass sein ringraumseitiger Anschluss in stromlosem Zustand immer mit dem Tank verbunden ist.

Für die angestrebte Funktion ist es besonderem Vorteil, dass gleichsinnig mit der Kraft der Rückstellfeder der ringraumseitige Druck auf das Stellorgan (z. B. Schieber) des Proportionaldruckregelventils wirkt und dass gleichsinnig mit der elektromagnetischen Kraft der tankseitige Druck auf das Stellorgan des Proportionaldruckregelventils wirkt. Damit tendiert das Proportionaldruckregelventil mit zunehmendem Druck auf der Ringraumseite, diese mit dem Tank zu verbinden, wobei der Tankdruck als Referenzgegendruck dient.

Gemäß einer weiteren bevorzugten Ausgestaltung der Erfindung wird alternativ zum Proportionaldruckregelventil ein elektromagnetisch ansteuerbares Proportionaldruckbegrenzungsventil verwendet. Dieses Ventil stellt wahlweise eine Verbindung zwischen seinem ringraumseitigen Anschluss und dem Tank her. Geeignete Proportionaldruckbegrenzungsventile werden beispielsweise als Modell TS08-27 durch die Fa. HydraForce, Lincolnshire, IL, USA angeboten.

Vorzugsweise verbindet das Proportionaldruckbegrenzungsventil im erregten Zustand seinen ringraumseitigen Anschluss mit seinem tankseitigen Anschluss (Tankstellung) und sperrt im stromlosen Zustand diese Verbindung (Sperrstellung).

Auch bei dem Proportionaldruckbegrenzungsventil ist vorzugsweise eine Rückstellfeder vorgesehen, die das Proportionaldruckbegrenzungsventil in seine Sperrstellung drängt, so dass sein ringraumseitiger Anschluss in stromlosem Zustand immer mit dem Tank verbunden ist.

Es ist bei Verwendung eines Proportionaldruckbegrenzungsventils von besonderem Vorteil, dass gleichsinnig mit der Kraft der Rückstellfeder der tankseitige Druck auf das Stellorgan des Proportionaldruckregelventils wirkt und dass gleichsinnig mit der elektromagnetischen Kraft der ringraumseitige Druck auf das Stellorgan des Proportionaldruckregelventils wirkt. Damit tendiert das Proportionaldruckbegrenzungsventil mit zunehmendem Druck auf der Ringraumseite, diese mit dem Tank zu verbinden, wobei der Tankdruck als Referenzgegendruck dient.

Das Proportionaldruckbegrenzungsventil steuert nur die Verbindung zwischen der Ringraumseite und dem Tank. Um die Ringraumseite auch mit dem Druck der Druckquelle beaufschlagen zu können, ist es von besonderem Vorteil, dass von der zwischen dem Magnetventil und dem Proportionaldruckbegrenzungsventil verlaufenden Leitung eine mit der Druckquelle in Verbindung stehende Druckleitung abzweigt.

Um hierbei den Druck an der Ringraumseite auf einen gewünschten Wert zu begrenzen ist es zweckmäßig in der Druckleitung eine Druckleitungsblende anzuordnen. Dies ermöglicht einen ständigen begrenzten Flüssigkeitsstrom von der Druckquelle zur Ringraumseite. Durch das Proportionaldruckbegrenzungsventil wird der Druck auf der Ringraumseite jedoch begrenzt, weil es bei Überschreiten eines anhand der elektrischen Ansteuerung einstellbaren ringraumseitigen Druckes öffnet.

Zusätzlich oder alternativ zur Druckleitungsblende kann in vorteilhafter Weise in der Druckleitung ein zweites Magnetventil angeordnet sein. Vorzugsweise enthält dieses Magnetventil in seiner geschlossenen Stellung eine Rückschlagventilfunktion, die einen Flüssigkeitszufluss von der Druckquelle aus verhindert, so dass keine oder nur eine vernachlässigbar kleine Leckage von der Druckquelle zur Ringraumseite gegeben ist. Wird als Magnetventil ein Proportionalventil verwendet, kann die Druckleitungsblende entfallen.

Die Druckquelle ist zweckmäßigerweise eine Hydraulikpumpe. Es kann sich beispielsweise um eine Hydraulikpumpe handeln, die bereits für andere Hydraulikabnehmer des Fahrzeugs zur Verfügung steht. Um die Hydraulikpumpe wirtschaftlich einsetzen zu können, wird häufig eine Pumpe mit einer Load-Sensing-Funktion verwendet, bei der der geforderte Systemdruck zur Ansteuerung der Pumpe herangezogen wird. Die Hydraulikpumpe fördert dabei nur bei Anforderung Hydraulikflüssigkeit und geht ansonsten in einen leistungsarmen Stand-by-Betrieb über.

Um für die erfindungsgemäße Federungseinrichtung mit Erfolg eine Load-Sensing-Pumpe einsetzen zu können, wird gemäß einer bevorzugten Weiterbildung der Erfindung vorgeschlagen, den Steueranschluss der Load-Sensing-Pumpe über eine Steuerleitung mit dem dem Proportionalventil zugewandten Anschluss des ersten Magnetventils zu verbinden. Wenn der an diesem Anschluss herrschende Druck über das Proportionalventil zum Tank hin abgebaut wird (nicht erregte Stellung des Ventils), besteht kein Druckmittelbedarf und die Load-Sensing-Pumpe geht in ihren Stand-by-Betrieb über. Ein Druckabbau aus dem Ringraum des Hydraulikzylinders wird hierbei durch das erste Magnetventil verhindert. Wird hingegen die Verbindung zum Tank durch das Proportionalventil geschlossen, so steigt der ringraumseitige Druck an (entweder über eine Druckleitung oder weil das Proportionalventil eine Verbindung zur Druckquelle schafft). Dieser Druckanstieg wird von der Load-Sensing-Pumpe wahrgenommen, welche ausschwenkt und ihren Ausgangsdruck so einstellt, dass er immer um beispielsweise 30 bar über dem ringraumseitigen Druck liegt.

Sofern das Proportionalventil keine Verbindung zum Tank herstellt, ist es für einen ordnungsgemäßen Load-Sensing-Betrieb erforderlich, dass der Druck der Druckquelle nicht ständig dem ringraumseitigen Druck entspricht, sondern den Erfordernissen gemäß abgebaut wird. Um hierbei einen Druckmittelabfluss von der Ringraumseite zum Tank zu ermöglichen, ist es von Vorteil, die Steuerleitung über eine Blende oder Drosselstelle mit dem Tank zu verbinden.

Es ist zweckmäßig, neben der Ringraumseite des Hydraulikzylinders auch dessen Zylinderraumseite in das Load-Sensing-System einzubeziehen. Hierbei ist es von Vorteil, ein Wechselventil vorzusehen, dessen erster Zulaufanschluss mit der ringraumseitigen Steuerleitung verbunden ist, dessen zweiter Zulaufanschluss mit einer zylinderraumseitigen Steuerleitung verbunden ist und dessen mittlerer Ablaufanschluss mit dem Steueranschluss der Load-Sensing-Pumpe verbunden ist.

Vorzugsweise sind die Ventile der erfindungsgemäßen Federungseinrichtung in einem gemeinsamen Steuerblock zusammengefasst. In diesem Steuerblock kann auch eine Ventilanordnung zur Niveauregelung, welche den Flüssigkeitszu- und -abfluss auf der Zylinderraumseite steuert, integriert sein.

Anhand der Zeichnung, die drei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das hydraulische Schaltschema einer hydropneumatischen Fahrzeugfederung mit einer ersten erfindungsgemäßen Federungseinrichtung,
- Fig. 2: eine zweite erfindungsgemäße Federungseinrichtung, die anstelle der ersten Federungseinrichtung im Zusammenhang mit der hydropneumatischen Fahrzeugfederung verwendbar ist und
- Fig. 3: eine dritte erfindungsgemäße Federungseinrichtung, die anstelle der ersten Federungseinrichtung im Zusammenhang mit der hydropneumatischen Fahrzeugfederung verwendbar ist.

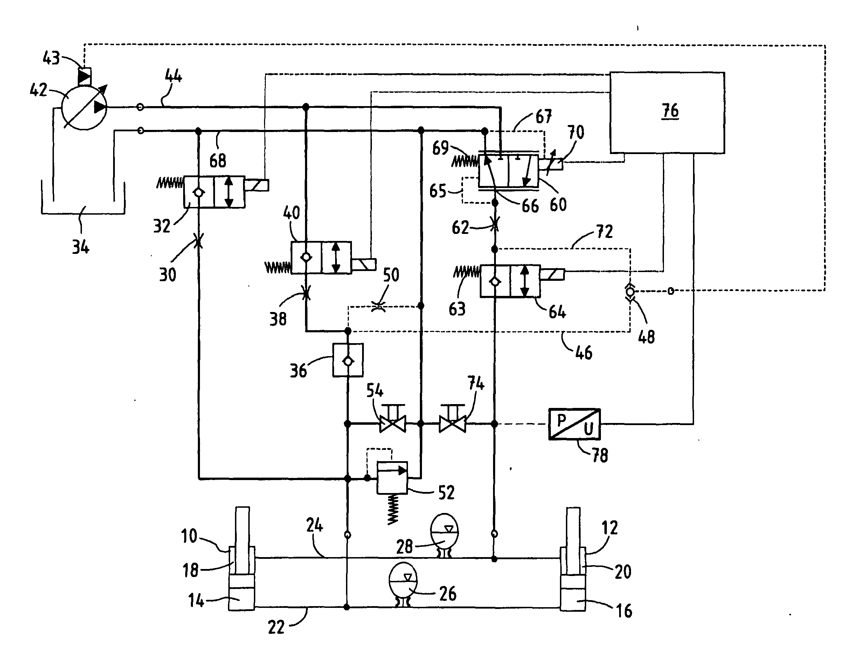

Das in Fig. 1 dargestellte Fahrzeugfederungssystem ist zur Federung einer lenkbaren, pendelnd aufgehängten, nicht näher dargestellten Traktorvorderachse bestimmt. Es enthält zwei Zylinder 10, 12. Die beiden Zylinderräume 14, 16 der Hydraulikzylinder 10, 12 und die beiden Ringräume 18, 20 der beiden Hydraulikzylinder 10, 12 sind jeweils über Hydraulikleitungen 22, 24 miteinander und mit einem zugehörigen Hydrospeicher 26, 28 verbunden.

Die zylinderraumseitige Hydraulikleitung 22 (Zylinderraumseite des Federkreises) ist über eine erste Blende 30 und ein erstes sitzdichtes Schaltventil 32 mit einem Flüssigkeitsbehälter oder Tank 34 verbunden. Das erste Schaltventil 32 lässt sich durch elektrische Signale zwischen einer Durchflussstellung und einer Sperrstellung, in der gewährleistet ist, dass keine Flüssigkeit in unbeabsichtigter Weise aus der Zylinderraumseite des Federkreises zum Tank 34 hin entweichen kann, umschalten. Die zylinderraumseitige Hydraulikleitung 22 ist des Weiteren über ein Rückschlagventil 36, eine zweite Blende 38 und ein zweites sitzdichtes Schaltventil 40 mit einer Druckquelle, bei der es sich um eine regelbare Load-Sensing-Pumpe 42 handelt, verbunden. Das zweite Schaltventil 40 lässt sich durch elektrische Signale zwischen einer Durchflussstellung und einer Sperrstellung, in der gewährleistet ist, dass keine Flüssigkeit in unbeabsichtigter Weise von der Hydraulikpumpe 42 in den Federkreis gelangt, umschalten. Das Rückschlagventil 36 sperrt den Flüssigkeitsstrom in entgegengesetzter Weise wie das zweite Schaltventil 40, um eine Leckage zu unterbinden, wenn der Druck in der Zylinderraumseite des Federkreises größer ist als der Druck der Versorgungsleitung 44.

Diese Ventilanordnung dient der Niveauregelung. Zur Verringerung der Niveaulage wird das erste Schaltventil 32 bestromt, sein Schieber schaltet in die Position "geöffnet" und Hydraulikflüssigkeit strömt aus dem zylinderraumseitigen Hydraulikleitung 22 kontrolliert über die erste Blende 30 zum Tank 34. Um die Achse hoch zu regeln wird das zweite Schaltventil 40 geöffnet, die Flüssigkeit strömt zunächst von der Versorgungsleitung 44 über die zweite Blende 38 in eine Load-Sensing-Leitung 46 und meldet über ein Wechselventil 48 den Druckmittelbedarf an den Steueranschluss 43 der Hydraulikpumpe 42. Diese regelt den Druck solange hoch, bis das Rückschlagventil 36 öffnet und Flüssigkeit in die zylinderraumseitige Hydraulikleitung 22 strömt. Über die zweite Blende 38 wird einerseits der Volumenstrom begrenzt, andererseits auch ein Druckabfall erzeugt, so dass an das Load-Sensing-System immer der auf der Zylinderraumseite herrschende Druck gemeldet wird. Dadurch schwenkt die Pumpe 42 nicht voll aus, sondern stellt immer einen Druck bereit, der z. B. 30 bar über dem Zylinderraumdruck liegt. Parallel dazu fließt bei geöffnetem zweiten Schaltventil 40 auch immer ein Volumenstrom über eine dritte Blende 50 zurück zum Tank 34. Dieser zusätzliche, durch die dritte Blende 50 bereitgestellte Querschnitt wird benötigt, um bei geschlossenem zweiten Schaltventil 40 den Load-Sensing-Druck zum Tank 34 hin zu entlasten.

Es sei betont, dass anstelle des ersten Schaltventils 32 und der ersten Blende 30 bzw. des zweiten Schaltventils 40 und der zweiten Blende 38 auch jeweils ein proportional angesteuertes, sitzdichtes 2/2-Wege-Schaltventil verwendet werden kann, welches sich stromgesteuert um ein gezieltes Maß öffnen lässt.

Die Zylinderraumseite des Federkreises, nämlich die Hydraulikleitung 22 ist über ein Druckbegrenzungsventil 52 auf einen bestimmten Maximaldruck, der üblicherweise von den Speichern bestimmt ist, abgesichert. Ein Ablassventil 54 wird im Servicefall dazu benutzt, die Zylinderraumseite vom Druck zu entlasten.

Die Einstellung des Ringraumdruckes erfolgt über eine erfindungsgemäße Federungseinrichtung. Diese besteht gemäß Fig. 1 im Wesentlichen aus einem elektrisch einstellbaren Proportionaldruckregelventil 60, einer Blende 62 und einem elektrisch schaltbaren Magnetventil 64, welche hintereinander angeordnet sind, wobei das Magnetventil 64 mit der ringraumseitigen Hydraulikleitung 24 in Verbindung steht und das Proportionaldruckregelventil 60 eine wahlweise Verbindung mit der Pumpe 42 oder mit dem Tank 34 ermöglicht. Der Schieber des Proportionaldruckregelventils 60 ist einerseits über eine Steuerleitung 65 dem Druck seines ringraumseitigen Anschlusses 66 und andererseits über eine Steuerleitung 67 dem Druck der Tankleitung 68 ausgesetzt, und zwar derart, dass der ringraumseitige Druck gemeinsam mit der Kraft einer Rückstellfeder 69 der Kraft des Elektromagneten 70 entgegenwirkt.

Das sitzdichte Magnetventil 64 öffnet in erregtem Zustand gegen die Kraft einer Rückstellfeder 63 eine Durchflussöffnung, welche im unbestromten Zustand derart verschlossen wird, dass ein Flüssigkeitsabfluss aus der ringraumseitigen Hydraulikleitung 24 zuverlässig verhindert wird. Das Magnetventil 64 ist beispielsweise ein sitzdichtes 2/2-Wegeventil. Es kann sich jedoch auch um ein elektromagnetisch steuerbares Proportionalventil handeln, wobei gegebenenfalls auf die Blende 62 verzichtet werden kann.

Zwischen dem Magnetventil 64 und der Blende 62 zweigt eine Load-Sensing-Leitung 72 ab, welche mit dem Wechselventil 48 verbunden ist. Das Wechselventil 48 leitet den höheren der Drücke der beiden Load-Sensing-Leitungen 46 und 72 an die Pumpe 42 weiter.

Über den Steuerstrom des Elektromagneten 70 kann ein bestimmter Flüssigkeitsdruck vorgewählt werden, welcher dann in der ringraumseitigen Hydraulikleitung 24 (Ringraumseite des Federkreises) eingestellt wird. Das sitzdichte Magnetventil 64 sorgt dafür, dass bei abgeschaltetem Proportionaldruckregelventil 60 eine möglichst geringe Leckage aus der Ringraumseite des Federkreises zum Tank 34 auftritt. Da das Proportionaldruckregelventil 60 unbestromt den Verbraucher zum Tank 34 schaltet, ermöglich es das geschlossene Magnetventil 64 auch, dass der Load-Sensing-Druck über das Proportionaldruckregelventil 60 zum Tank 34 hin abgebaut werden kann, ohne dass Flüssigkeit aus der ringraumseitigen Hydraulikleitung 24 abfließt. Die Einstellung des Ringraumdruckes erfolgt kontrolliert über die Blende 62 sowie gegebenenfalls über ein langsames Aufregeln des Proportionaldruckregelventil 60 (in letzterem Fall könnte möglicherweise auf die Blende verzichtet werden). Auch hier sorgt die Entnahme des Load-Sensing-Druckes hinter der Blende 62 (also zwischen Blende 62 und Magnetventil 64) dafür, dass die Pumpe 42 nur auf einen Druck von 30 bar über dem Ringraumdruck ausgeschwenkt wird. Ein Ablassventil 74 wird im Servicefall dazu benutzt, die Ringraumseite vom Druck zu entlasten.

Alternativ ist anstelle des Magnetventils 64 auch die Verwendung eines sitzdichten, entsperrbaren Rückschlagventils möglich. Die Entsperrung kann in diesem Fall z. B. über einen Druck erfolgen, den man auf der Seite für die Niveauregelung abnimmt.

Die beiden Schaltventile 32, 40, das Proportionaldruckregelventil 60 und das Magnetventil 64 werden durch eine elektrische Steuereinheit 76 angesteuert. Die Steuereinheit 76 erhält Signale von einem nicht gezeigten Positionsgeber, die für die Niveauregelung mittels der Schaltventile 32, 40 herangezogen werden. Für die Einstellung des ringraumseitigen Drucks mittels des Proportionaldruckregelventils 60 wertet die Steuereinheit 76 auch Messwerte eines nicht gezeigten Fahrzeuggeschwindigkeitssensors und eines Zugkraftsensors aus. Die Federsteifigkeit lässt sich somit automatisch in Abhängigkeit der Fahrzeuggeschwindigkeit und/oder davon einstellen, ob ein Gerät an das Fahrzeug angehängt oder montiert ist, was aus dem Zugkraftsensorsignal geschlossen werden kann. Die Steuereinheit 76 kann, wenn dies zweckmäßig ist, auch Signale einer Heck- und/oder Frontzapfwelle oder anderer Fahrzeugaggregate empfangen und auswerten. Die Ballastierung des Fahrzeugs lässt sich durch die Bedienungsperson beispielsweise anhand eines Schalters vorgeben. Sie wird ebenfalls durch die Steuereinheit erfasst und zur Einstellung des Proportionaldruckregelventils 60 ausgewertet. Die genannten und weitere Signale können der Steuereinheit 76 beispielsweise über einen CAN-BUS zur Verfügung gestellt werden.

In Fig. 1 ist des Weiteren ein Drucksensor 78 an die ringraumseitige Hydraulikleitung 24 angeschlossen, dessen Signale von der Steuereinheit 76 ausgewertet werden und zur Einstellung des Proportionaldruckregelventil 60 herangezogen werden. Bei Verwendung des Drucksensors 78 kann auch ein Proportionaldruckregelventil verwendet werden, das rein elektrische (und nicht hydraulisch) angesteuert wird, so dass die beiden Steuerleitungen 65 und 67 in Fig. 1 entfallen.

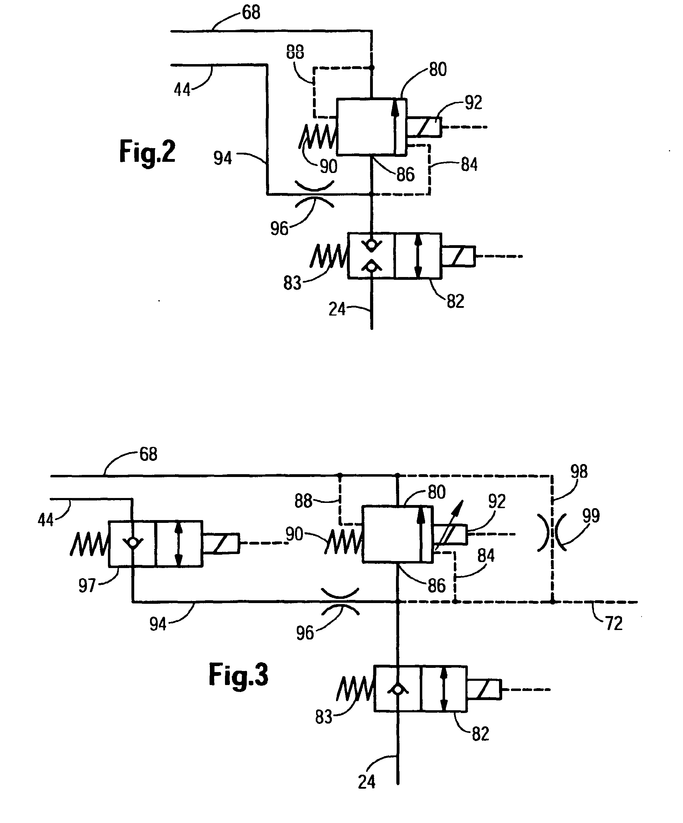

Fig. 2 zeigt eine bezüglich Fig. 1 alternative Ausführungsvariante einer der Einstellung des Ringraumdruckes dienenden erfindungsgemäßen Federungseinrichtung. Anstelle des in Fig. 1 gezeigten Proportionaldruckregelventils 60 wird gemäß Fig. 2 ein elektrisch schaltbares Proportionaldruckbegrenzungsventil 80 verwendet, das bezüglich der Verbindung zwischen der ringraumseitigen Hydraulikleitung 24 und der Tankleitung 68 in Reihe mit einem Magnetventil 82 geschaltet ist und die ringraumseitige Hydraulikleitung 24 mit der Tankleitung 68 verbindet, wobei das Proportionaldruckbegrenzungsventil 80 auf der Seite der Tankleitung 68 und das Schaltventil 82 auf der Seite der ringraumseitigen Hydraulikleitung 24 liegt.

Der Schieber des Proportionaldruckbegrenzungsventils 80 ist einerseits über eine Steuerleitung 84 dem Druck seines ringraumseitigen Anschlusses 86 und andererseits über eine Steuerleitung 88 dem Druck der Tankleitung 68 ausgesetzt, und zwar derart, dass der ringraumseitige Druck gegen die Kraft einer Rückstellfeder 90 gleichsinnig mit der Kraft des Elektromagneten 92 wirkt. Das doppeltsitzdichte Magnetventil 82 öffnet in erregtem Zustand gegen die Kraft einer Rückstellfeder 83 eine Durchflussöffnung, welche im unbestromten Zustand derart verschlossen wird, dass ein Flüssigkeitsabfluss aus der ringraumseitigen Hydraulikleitung 24 sowie ein Flüssigkeitsstrom in entgegengesetzter Richtung zuverlässig verhindert wird. Zwischen dem Magnetventil 82 und dem Proportionaldruckbegrenzungsventil 80 zweigt eine mit der Versorgungsleitung in Verbindung stehende Druckleitung 94 ab, in der sich eine Druckleitungsblende 96 befindet. Die beiden in Fig. 2 gezeigten Ventile 80, 82 werden entsprechend Fig. 1 durch eine Steuereinheit 76 angesteuert.

Über den Steuerstrom des Elektromagneten 92 des Proportionaldruckbegrenzungsventils 80 kann ein bestimmter Flüssigkeitsdruck vorgewählt werden, welcher dann in der ringraumseitigen Hydraulikleitung 24 (Ringraumseite des Federkreises) eingestellt wird. Das doppeltsitzdichte Magnetventil 82 sorgt dafür, dass bei abgeschaltetem Proportionaldruckbegrenzungsventil 80 eine möglichst geringe Leckage aus der Ringraumseite des Federkreises zum Tank 34 und umgekehrt von der Versorgungsleitung 44 zur Ringraumseite des Federkreises auftritt. Wenn das Proportionaldruckbegrenzungsventil 80 geschlossen ist, steht an seinem Anschluss 86 der Pumpendruck an. Wenn es öffnet, wird der am Anschluss 86 anstehende Pumpendruck über die Tankleitung 68 zum Tank 34 hin abgebaut. Die Druckleitungsblende 96 begrenzt dabei den Flüssigkeitszustrom von der Pumpe 42, so dass an dem Anschluss 86 der Druck entsprechend dem Öffnungsgrad des Proportionaldruckbegrenzungsventils 80 sinkt. Bei geöffnetem Magnetventil 82 lässt sich somit der Druck in der ringraumseitigen Hydraulikleitung 24 auf eine gewünschten Wert einstellen.

Die Fig. 3 zeigt eine modifizierte Ausgestaltung der in Fig. 2 dargestellten der Einstellung des Ringraumdruckes dienenden erfindungsgemäßen Federungseinrichtung. In den Figuren 2 und 3 wurden gleichartige Komponenten mit den selben Bezugsziffern belegt. Die in Fig. 3 dargestellte Federungseinrichtung ermöglicht die Bereitstellung eines Load-Sensing-Signals.

Die in Fig. 3 dargestellte Ausgestaltung enthält in der Druckleitung 94 die bereits erwähnte Druckleitungsblende 96 und zusätzlich ein zweites Magnetventil 97, welche hintereinander angeordnet sind. Es ist jedoch auch möglich, die Funktion der Druckleitungsblende 96 in das Magnetventil 97 zu integrieren (proportionale Ansteuerung). Das zweite Magnetventil (97) enthält in seiner geschlossenen Stellung eine Rückschlagventilfunktion, die einen Flüssigkeitszufluss von der Druckquelle (42) aus verhindert. Des Weiteren ist gemäß Fig. 3 der Anschluss 86 des Proportionaldruckbegrenzungsventils 80 über eine Steuerleitung 98, in sich eine Blendestelle 99 befindet, mit der Tankleitung 68 verbunden.

Durch das zweite Magnetventil 97 lässt sich der von der Pumpe 42 kommende Flüssigkeitsstrom unterbrechen, so dass bei geschlossenem Proportionaldruckbegrenzungsventil 80 an dessen Anschluss 86 nicht mehr der Pumpendruck ansteht. Dieser wird vielmehr über die gedrosselte Steuerleitung 98 zum Tank 34 hin abgebaut. Damit kann der am Anschluss 86 anstehende Druck als Load-Sensing-Druck genutzt werden und ist zu diesem Zweck mit der in Fig. 1 näher dargestellten Load-Sensing-Leitung 72 verbunden.

Auch wenn die Erfindung lediglich anhand von drei Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche (Patentansprüche für folgende(n) Vertragsstaat(en): DE)

1. Hydropneumatische Federungseinrichtung mit wenigstens einem hydraulischen Federungszylinder (10, 12), dessen Zylinderraum (14, 16) und Ringraum (18, 20) jeweils mit wenigstens einem Druckspeicher (26, 28) in Verbindung stehen und mittels Ventilanordnungen wahlweise mit einer Druckquelle (42) und einem Tank (34) verbindbar sind, wobei die dem Ringraum (18, 20) zugeordnete Ventilanordnung wenigstens ein erstes sitzdichtes Magnetventil (64, 82) und ein elektrisch ansteuerbares der Druckeinstellung im Ringraum dienendes Proportionalventil (60, 80) aufweist, **dadurch gekennzeichnet, dass** ein Drucksensor (78) zur Erfassung der Drucks im Ringraum und/oder ein Kraftsensor zur Erfassung der Achslast vorgesehen ist, dessen Signale zur Ansteuerung des Proportionalventils (60,80) herangezogen werden.

2. Federungseinrichtung nach Anspruch 1, **dadurch gekennzeichnet, dass** das Proportionalventil (60, 80) zu seiner hydraulischen Ansteuerung einerseits dem Druck seines ringraumseitigen Anschlusses (66, 86) und andererseits dem Druck seines tankseitigen Anschlusses (68) ausgesetzt ist.

3. Federungseinrichtung nach einem der vorstehenden Ansprüche, **dadurch gekennzeichnet, dass** das erste Magnetventil (64, 82) in seiner geschlossenen Stellung eine Rückschlagventilfunktion enthält, die einen Flüssigkeitsabfluss vom Ringraum (18, 20) verhindert.

4. Federungseinrichtung nach einem der vorstehenden Ansprüche, **dadurch gekennzeichnet, dass** das erste Magnetventil (82) in seiner geschlossenen Stellung zwei Rückschlagventilfunktionen enthält, die einen Flüssigkeitsdurchfluss in beide Richtungen verhindert.

5. Federungseinrichtung nach einem der vorhergehenden Ansprüche, **dadurch gekennzeichnet, dass** zwischen dem ersten Magnetventil (64) und dem Proportionalventil (60) eine den Durchfluss begrenzende Blende (62) angeordnet ist.

6. Federungseinrichtung nach einem der vorhergehenden Ansprüche, **dadurch gekennzeichnet, dass** das Proportionalventil ein elektromagnetisch ansteuerbares Proportionaldruckregelventil (60) ist, dass vorzugsweise das Proportionaldruckregelventil (60) in stromloser Stellung seinen ringraumseitigen Anschluss (66) mit seinem tankseitigen Anschluss (68) verbindet (Tankstellung) und im erregten Zustand seinen druckquellenseitigen Anschluss (44) mit dem ringraumseitigen Anschluss (66) verbindet (Druckquellenstellung), und dass eine Rückstellfeder (69) vorgesehen sein kann, die das Proportionaldruckregelventil (60) in seine Tankstellung drängt.

7. Federungseinrichtung nach Anspruch 6, **dadurch gekennzeichnet, dass** gleichsinnig mit der Kraft der Rückstellfeder (69) der ringraumseitige Druck auf das Proportionaldruckregelventil (60) wirkt und dass gleichsinnig mit der elektromagnetischen Kraft (70) der tankseitige Druck auf das Proportionaldruckregelventil (60) wirkt.

8. Federungseinrichtung nach einem der Ansprüche 1 bis 6, **dadurch gekennzeichnet, dass** das Proportionalventil ein elektromagnetisch ansteuerbares Proportionaldruckbegrenzungsventil (80) ist und dass vorzugsweise das Proportionaldruckbegrenzungsventil (80) im erregten Zustand seinen ringraumseitigen Anschluss (86) mit seinem tankseitigen Anschluss (68) verbindet (Tankstellung) und im stromlosen Zustand die Verbindung sperrt (Sperrstellung) .

9. Federungseinrichtung nach Anspruch 8, **dadurch gekennzeichnet, dass** eine Rückstellfeder (90) vorgesehen ist, die das Proportionaldruckbegrenzungsventil (80) in seine Sperrstellung drängt, dass vorzugsweise gleichsinnig mit der Kraft der Rückstellfeder (90) der tankseitige Druck auf das Proportionaldruckregelventil (80) wirkt und dass gleichsinnig mit der elektromagnetischen Kraft (92) der ringraumseitige Druck auf das Proportionaldruckregelventil (80) wirkt.

10. Federungseinrichtung nach Anspruch 8 oder 9, **dadurch gekennzeichnet, dass** von der zwischen dem Magnetventil (82) und dem Proportionaldruckbegrenzungsventil (80) verlaufenden Leitung eine mit der Druckquelle (42) in Verbindung stehende Druckleitung (94) abzweigt, dass vorzugsweise in der Druckleitung (94) eine Druckleitungsblende (96) angeordnet ist, und dass in der Druckleitung (94) ein zweites Magnetventil (97) angeordnet sein kann, welches in seiner geschlossenen Stellung eine Rückschlagventilfunktion enthält, die einen Flüssigkeitsabfluss von der Druckquelle (42) verhindert.

11. Federungseinrichtung nach einem der vorhergehenden Ansprüche, **dadurch gekennzeichnet, dass** die Druckquelle eine Load-Sensing-Pumpe (42) enthält, deren Steueranschluss (43) über eine Steuerleitung (72) mit dem dem Proportionalventil (60, 80) zugewandten Anschluss des ersten Magnetventils (64, 82) verbunden ist, dass vorzugsweise die Steuerleitung (72) über eine Blendestelle (99) mit dem Tank verbunden ist und dass ein Wechselventil (48) vorgesehen sein kann, dessen erster Zulaufanschluss mit der Steuerleitung (72) verbunden ist, dessen zweiter Zulaufanschluss mit einer kolbenraumseitigen Load-Sensing-Leitung (46) verbunden ist und dessen Ablaufanschluss mit dem Steueranschluss (43) der Load-Sensing-Pumpe (42) verbunden ist.

## Patentansprüche (Patentansprüche für folgende(n) Vertragsstaat(en): AT, BE, BG, CH, CY, CZ, DK, EE, ES, FI, FR, GB, GR, HU, IE, IT, LI, LU, MC, NL, PL, PT, RO, SE, SI, SK, TR)

1. Hydropneumatische Federungseinrichtung mit wenigstens einem hydraulischen Federungszylinder (10, 12), dessen Zylinderraum (14, 16) und Ringraum (18, 20) jeweils mit wenigstens einem Druckspeicher (26, 28) in Verbindung stehen und mittels Ventilanordnungen wahlweise mit einer Druckquelle (42) und einem Tank (34) verbindbar sind, **dadurch gekennzeichnet, dass** die dem Ringraum (18, 20) zugeordnete Ventilanordnung wenigstens ein erstes sitzdichtes Magnetventil (64, 82) und ein elektrisch ansteuerbares der Druckeinstellung im Ringraum dienendes Proportionalventil (60, 80) aufweist.

2. Federungseinrichtung nach Anspruch 1, **dadurch gekennzeichnet, dass** ein Drucksensor (78) zur Erfassung der Drucks im Ringraum und/oder ein Kraftsensor zur Erfassung der Achslast vorgesehen ist, dessen Signale zur Ansteuerung des Proportionalventils (60,80) herangezogen werden.

3. Federungseinrichtung nach Anspruch 1 oder 2, **dadurch gekennzeichnet, dass** das Proportionalventil (60, 80) zu seiner hydraulischen Ansteuerung einerseits dem Druck seines ringraumseitigen Anschlusses (66, 86) und andererseits dem Druck seines tankseitigen Anschlusses (68) ausgesetzt ist.

4. Federungseinrichtung nach einem der vorstehenden Ansprüche, **dadurch gekennzeichnet, dass** das erste Magnetventil (64, 82) in seiner geschlossenen Stellung eine Rückschlagventilfunktion enthält, die einen Flüssigkeitsabfluss vom Ringraum (18, 20) verhindert.

5. Federungseinrichtung nach einem der vorstehenden Ansprüche, **dadurch gekennzeichnet, dass** das erste Magnetventil (82) in seiner geschlossenen Stellung zwei Rückschlagventilfunktionen enthält, die einen Flüssigkeitsdurchfluss in beide Richtungen verhindert.

6. Federungseinrichtung nach einem der vorhergehenden Ansprüche, **dadurch gekennzeichnet, dass** zwischen dem ersten Magnetventil (64) und dem Proportionalventil (60) eine den Durchfluss begrenzende Blende (62) angeordnet ist.

7. Federungseinrichtung nach einem der vorhergehenden Ansprüche, **dadurch gekennzeichnet, dass** das Proportionalventil ein elektromagnetisch ansteuerbares Proportionaldruckregelventil (60) ist, dass vorzugsweise das Proportionaldruckregelventil (60) in stromloser Stellung seinen ringraumseitigen Anschluss (66) mit seinem tankseitigen Anschluss (68) verbindet (Tankstellung) und im erregten Zustand seinen druckquellenseitigen Anschluss (44) mit dem ringraumseitigen Anschluss (66) verbindet (Druckquellenstellung), und dass eine Rückstellfeder (69) vorgesehen sein kann, die das Proportionaldruckregelventil (60) in seine Tankstellung drängt.

8. Federungseinrichtung nach Anspruch 7, **dadurch gekennzeichnet, dass** gleichsinnig mit der Kraft der Rückstellfeder (69) der ringraumseitige Druck auf das Proportionaldruckregelventil (60) wirkt und dass gleichsinnig mit der elektromagnetischen Kraft (70) der tankseitige Druck auf das Proportionaldruckregelventil (60) wirkt.

9. Federungseinrichtung nach einem der Ansprüche 1 bis 6, **dadurch gekennzeichnet, dass** das Proportionalventil ein elektromagnetisch ansteuerbares Proportionaldruckbegrenzungsventil (80) ist und dass vorzugsweise das Proportionaldruckbegrenzungsventil (80) im erregten Zustand seinen ringraumseitigen Anschluss (86) mit seinem tankseitigen Anschluss (68) verbindet (Tankstellung) und im stromlosen Zustand die Verbindung sperrt (Sperrstellung).

10. Federungseinrichtung nach Anspruch 9, **dadurch gekennzeichnet, dass** eine Rückstellfeder (90) vorgesehen ist, die das Proportionaldruckbegrenzungsventil (80) in seine Sperrstellung drängt, dass vorzugsweise gleichsinnig mit der Kraft der Rückstellfeder (90) der tankseitige Druck auf das Proportionaldruckregelventil (80) wirkt und dass gleichsinnig mit der elektromagnetischen Kraft (92) der ringraumseitige Druck auf das Proportionaldruckregelventil (80) wirkt.

11. Federungseinrichtung nach Anspruch 9 oder 10, **dadurch gekennzeichnet, dass** von der zwischen dem Magnetventil (82) und dem Proportionaldruckbegrenzungsventil (80) verlaufenden Leitung eine mit der Druckquelle (42) in Verbindung stehende Druckleitung (94) abzweigt, dass vorzugsweise in der Druckleitung (94) eine Druckleitungsblende (96) angeordnet ist, und dass in der Druckleitung (94) ein zweites Magnetventil (97) angeordnet sein kann, welches in seiner geschlossenen Stellung eine Rückschlagventilfunktion enthält, die einen Flüssigkeitsabfluss von der Druckquelle (42) verhindert.

12. Federungseinrichtung nach einem der vorhergehenden Ansprüche, **dadurch gekennzeichnet, dass** die Druckquelle eine Load-Sensing-Pumpe (42) enthält, deren Steueranschluss (43) über eine Steuerleitung (72) mit dem dem Proportionalventil (60, 80) zugewandten Anschluss des ersten Magnetventils (64, 82) verbunden ist, dass vorzugsweise die Steuerleitung (72) über eine Blendestelle (99) mit dem Tank verbunden ist und dass ein Wechselventil (48) vorgesehen sein kann, dessen erster Zulaufanschluss mit der Steuerleitung (72) verbunden ist, dessen zweiter Zulaufanschluss mit einer kolbenraumseitigen Load-Sensing-Leitung (46) verbunden ist und dessen Ablaufanschluss mit dem Steueranschluss (43) der Load-Sensing-Pumpe (42) verbunden ist.

## Claims (Claims for the following Contracting State(s): DE)

1. Hydropneumatic suspension system having at least one hydraulic suspension cylinder (10, 12), the cylinder chamber (14, 16) and ring chamber (18, 20) of which each communicate with at least one accumulator (26, 28) and may be optionally connected to a pressure source (42) and a tank (34) by means of valve systems, the valve system associated with the ring chamber (18, 20) has at least one first tightly fitting solenoid valve (64, 82) and an electrically controlled proportional valve (60, 80) for adjusting the pressure in the ring chamber, **characterised in that** a pressure sensor (78) is provided for sensing the pressure in the ring chamber and/or a force sensor for detecting the axle load, the signals from which are used to control the proportional valve (60, 80).

2. Suspension system according to claim 1, **characterised in that**, to control it hydraulically, the proportional valve (60, 80) is subjected on the one hand to the pressure of its port (66, 86) at the ring chamber side and on the other hand to the pressure of its port (68) at the tank side.

3. Suspension system according to one of the preceding claims, **characterised in that**, in its closed position, the first solenoid valve (64, 82) includes a check valve function which prevents a fluid outflow from the ring chamber (18, 20).

4. Suspension system according to one of the preceding claims, **characterised in that**, in its closed position, the first solenoid valve (82) includes two check valve functions which prevent fluid flowing through in both directions.

5. Suspension system according to one of the preceding claims, **characterised in that** a flow-limiting flow restriction (62) is arranged between the first solenoid valve (64) and the proportional valve (60).

6. Suspension system according to one of the preceding claims, **characterised in that** the proportional valve is an electromagnetically controlled proportional pressure control valve (60), **in that** the proportional pressure control valve (60), in its currentless position, preferably connects its ring chamber port (66) to its tank port (68) (tank position) and in its excited state connects its pressure source port (44) to the ring chamber port (66) (pressure source position), and **in that** a return spring (69) can be provided which urges the proportional pressure control valve (60) into its tank position.

7. Suspension system according to claim 6, **characterised in that** the pressure at the ring chamber side acts upon the proportional pressure control valve (60) in the same direction as the force of the return spring (69), and **in that** the pressure at the tank side acts upon the proportional pressure control valve (60) in the same direction as the electromagnetic force (70).

8. Suspension system according to one of claims 1 to 5, **characterised in that** the proportional valve is an electromagnetically controlled proportional pressure-limiting valve (80) and **in that** the proportional pressure-limiting valve (80) in its excited state preferably connects its ring chamber port (86) to its tank port (68) (tank position), and in its currentless state blocks this connection (blocking position).

9. Suspension system according to claim 8, **characterised in that** a return spring (90) is provided which urges the proportional pressure-limiting valve (80) into its blocking position, **in that** the pressure at the tank side preferably acts upon the proportional pressure control valve (80) in the same direction as the force of the return spring (90), and **in that** the pressure at the ring chamber side acts upon the proportional pressure control valve (80) in the same direction as the electromagnetic force (92).

10. Suspension system according to claim 8 or 9, **characterised in that** a pressure line (94) communicating with the pressure source (42) branches off the line extending between the solenoid valve (82) and the proportional pressure- limiting valve (80), **in that** a pressure line flow restriction (96) is preferably arranged in the pressure line (94), and **in that** in the pressure line (94) can be arranged a second solenoid valve (97) which, in its closed position, includes a check valve function which prevents any flow of fluid from the pressure source (42).

11. Suspension system according to one of the preceding claims, **characterised in that** the pressure source contains a load-sensing pump (42), the control port (43) of which is connected via a control line (72) to the port of the first solenoid valve (64, 82) facing the proportional valve (60, 80), **in that** the control line (72) is preferably connected to the tank via a flow restriction (99) and **in that** a shuttle valve (48) can be provided, of which the first inlet is connected to the control line (72), the second inlet is connected to a load-sensing line (46) on the piston chamber side, and the outlet is connected to the control port (43) of the load-sensing pump (42).

## Claims (Claims for the following Contracting State(s): AT, BE, BG, CH, CY, CZ, DK, EE, ES, FI, FR, GB, GR, HU, IE, IT, LI, LU, MC, NL, PL, PT, RO, S)

1. Hydropneumatic suspension system having at least one hydraulic suspension cylinder (10, 12), the cylinder chamber (14, 16) and ring chamber (18, 20) of which each communicate with at least one accumulator (26, 28) and may be optionally connected to a pressure source (42) and a tank (34) by means of valve systems, **characterised in that** the valve system associated with the ring chamber (18, 20) has at least one first tightly fitting solenoid valve (64, 82) and an electrically controlled proportional valve (60, 80) for adjusting the pressure in the ring chamber.

2. Suspension system according to claim 1, **characterised in that** a pressure sensor (78) is provided for sensing the pressure in the ring chamber and/or a force sensor for detecting the axle load, the signals from which are used to control the proportional valve (60, 80).

3. Suspension system according to claim 1 or 2, **characterised in that**, to control it hydraulically, the proportional valve (60, 80) is subjected on the one hand to the pressure of its port (66, 86) at the ring chamber side and on the other hand to the pressure of its port (68) at the tank side.

4. Suspension system according to one of the preceding claims, **characterised in that**, in its closed position, the first solenoid valve (64, 82) includes a check valve function which prevents a fluid outflow from the ring chamber (18, 20).

5. Suspension system according to one of the preceding claims, **characterised in that**, in its closed position, the first solenoid valve (82) includes two check valve functions which prevent fluid flowing through in both directions.

6. Suspension system according to one of the preceding claims, **characterised in that** a flow-limiting flow restriction (62) is arranged between the first solenoid valve (64) and the proportional valve (60).

7. Suspension system according to one of the preceding claims, **characterised in that** the proportional valve is an electromagnetically controlled proportional pressure control valve (60), **in that** the proportional pressure control valve (60), in its currentless position, preferably connects its ring chamber port (66) to its tank port (68) (tank position) and in its excited state connects its pressure source port (44) to the ring chamber port (66) (pressure source position), and **in that** a return spring (69) can be provided which urges the proportional pressure control valve (60) into its tank position.

8. Suspension system according to claim 7, **characterised in that** the pressure at the ring chamber side acts upon the proportional pressure control valve (60) in the same direction as the force of the return spring (69), and **in that** the pressure at the tank side acts upon the proportional pressure control valve (60) in the same direction as the electromagnetic force (70).

9. Suspension system according to one of claims 1 to 6, **characterised in that** the proportional valve is an electromagnetically controlled proportional pressure-limiting valve (80) and **in that** the proportional pressure-limiting valve (80) in its excited state preferably connects its ring chamber port (86) to its tank port (68) (tank position), and in its currentless state blocks this connection (blocking position).

10. Suspension system according to claim 9, **characterised in that** a return spring (90) is provided which urges the proportional pressure-limiting valve (80) into its blocking position, **in that** the pressure at the tank side preferably acts upon the proportional pressure control valve (80) in the same direction as the force of the return spring (90), and **in that** the pressure at the ring chamber side acts upon the proportional pressure control valve (80) in the same direction as the electromagnetic force (92).

11. Suspension system according to claim 9 or 10, **characterised in that** a pressure line (94) communicating with the pressure source (42) branches off the line extending between the solenoid valve (82) and the proportional pressure-limiting valve (80), **in that** a pressure line flow restriction (96) is preferably arranged in the pressure line (94), and **in that** in the pressure line (94) can be arranged a second solenoid valve (97) which, in its closed position, includes a check valve function which prevents any flow of fluid from the pressure source (42).

12. Suspension system according to one of the preceding claims, **characterised in that** the pressure source contains a load-sensing pump (42), the control port (43) of which is connected via a control line (72) to the port of the first solenoid valve (64, 82) facing the proportional valve (60, 80), **in that** the control line (72) is preferably connected to the tank via a flow restriction (99) and **in that** a shuttle valve (48) can be provided, of which the first inlet is connected to the control line (72), the second inlet is connected to a load-sensing line (46) on the piston chamber side, and the outlet is connected to the control port (43) of the load-sensing pump (42).

## Revendications (Revendications pour l'(les) Etat(s) contractant(s) suivant(s): DE)

1. Système de suspension hydropneumatique comportant au moins un cylindre de suspension hydraulique (10, 20), dont la chambre de cylindre (14, 16) et la chambre annulaire (18, 20) sont chacune reliées à au moins un réservoir de pression (26, 28) et peuvent être reliées au choix par l'intermédiaire de systèmes de vannes à une source de pression (42) et une cuve (34), le système de vannes associé à la chambre annulaire (18, 20) comporte au moins une première vanne magnétique (64, 82) à siège étanche et une vanne à action proportionnelle (60, 80), qui peut être actionnée électriquement et qui est destinée à réguler la pression dans la chambre annulaire, **caractérisé en ce qu'**il est prévu un capteur de pression (78) destiné à détecter la pression dans la chambre annulaire et/ou un capteur de force, qui est destiné à détecter la charge axiale et dont les signaux sont pris en compte pour l'activation de la vanne à action proportionnelle (60, 80).

2. Système de suspension selon la revendication 1, **caractérisé en ce que** la vanne à action proportionnelle (60, 80), en vue de son activation hydraulique, est sollicitée, d'une part, par la pression de son raccord (66, 86) du coté chambre annulaire et, d'autre part, par la pression de son raccord (68) du coté cuve.

3. Système de suspension selon l'une quelconque des revendications précédentes, **caractérisé en ce que** la première vanne magnétique (64, 82) remplit en position fermée une fonction de non retour, qui empêche un écoulement du liquide depuis la chambre annulaire (18, 20).

4. Système de suspension selon l'une quelconque des revendications précédentes, **caractérisé en ce que** la première vanne magnétique (82) en position fermée remplit deux fonctions de non retour qui empêchent un écoulement du liquide dans les deux directions.

5. Système de suspension selon l'une quelconque des revendications précédentes, **caractérisé en ce qu'**un obturateur (62) limitant l'écoulement est monté entre la première vanne magnétique (64) et la vanne à action proportionnelle (60).

6. Système de suspension selon l'une quelconque des revendications précédentes, **caractérisé en ce que** la vanne à action proportionnelle est une vanne de réglage proportionnel de la pression (60) activable par voie électromagnétique, **en ce que**, de préférence, la vanne de réglage proportionnel de la pression (60), à l'état hors courant, établit la liaison entre son raccord (66) du côté chambre annulaire et son raccord (68) du côté cuve (position cuve) et à l'état sollicité par le courant établit la liaison entre son raccord (44) du coté source de pression et le raccord (66) du côté chambre annulaire (position source de pression), et **en ce qu'**il peut être prévu un ressort de rappel (69) qui pousse la vanne de réglage proportionnel de la pression (60) dans sa position cuve.

7. Système de suspension selon la revendication 6, **caractérisé en ce que** la pression du côté chambre annulaire agit sur la vanne de réglage proportionnel de la pression (60) dans le même sens que la force du ressort de rappel (69) et **en ce que** la pression du côté cuve agit sur la vanne de réglage proportionnel de la pression (60) dans le même sens que la force électromagnétique (70).

8. Système de suspension selon l'une quelconque des revendications 1 à 5, **caractérisé en ce que** la vanne à action proportionnelle est une vanne de limitation proportionnelle de la pression (80) et **en ce que**, de préférence, la vanne de limitation proportionnelle de la pression (80) à l'état sollicité par le courant établit la liaison entre son raccord (86) du côté chambre annulaire et le raccord (68) du coté cuve (position cuve) et à l'état hors courant ferme la liaison (position de fermeture).

9. Système de suspension selon la revendication 8, **caractérisé en ce qu'**il est prévu un ressort de rappel (90), qui pousse la vanne de limitation proportionnelle de la pression (80) dans sa position de fermeture, **en ce que** de préférence la pression du côté cuve agit sur la vanne de limitation proportionnelle de la pression (80) dans le même sens que la force du ressort de rappel (90) et **en ce que** la pression du côté chambre annulaire agit sur la vanne de limitation proportionnelle de la pression (80) dans le même sens que la force électromagnétique (92).

10. Système de suspension selon la revendication 8 ou 9, **caractérisé en ce qu'**une conduite de pression (94) reliée à la source de pression (42) est montée en dérivation sur la conduite montée entre la vanne magnétique (82) et la vanne de limitation proportionnelle de la pression (80), **en ce qu'**un obturateur (96) est agencé de préférence dans la conduite de pression (94), et **en ce qu'**une deuxième vanne magnétique (97) peut être agencée dans la conduite de pression (94), laquelle vanne dans sa position fermée remplit une fonction de vanne de non retour qui empêche un écoulement du liquide depuis la source de pression (42).

11. Système de suspension selon l'une quelconque des revendications précédentes, **caractérisé en ce que** la source de pression comporte une pompe de détection de charge (42), dont le raccord de commande (43) communique via une conduite de commande (72) avec le raccord, orienté vers la vanne à action proportionnelle (60, 80), de la première vanne magnétique (64, 82), **en ce que** de préférence la conduite de commande (72) est reliée à la cuve via une zone d'obturation (99) et **en ce qu'**il peut être prévu une vanne à deux voies (48) dont le premier raccord d'admission est relié à la conduite de commande (72), dont le deuxième raccord d'admission est relié à une conduite de détection de charge (46) du côté chambre de piston et dont le raccord de sortie est relié au raccord de commande (43) de la pompe de détection de charge (42).

## Revendications (Revendications pour l'(les) Etat(s) contractant(s) suivant(s): AT, BE, BG, CH, CY, CZ, DK, EE, ES, FI, FR, GB, GR, HU, IE, IT, LI, LU, MC, NL, PL)

1. Système de suspension hydropneumatique comportant au moins un cylindre de suspension hydraulique (10, 20), dont la chambre de cylindre (14, 16) et la chambre annulaire (18, 20) sont chacune reliées à au moins un réservoir de pression (26, 28) et peuvent être reliées au choix par l'intermédiaire de systèmes de vannes à une source de pression (42) et une cuve (34), **caractérisé en ce que** le système de vannes associé à la chambre annulaire (18, 20) comporte au moins une première vanne magnétique (64, 82) à siège étanche et une vanne à action proportionnelle (60, 80), qui peut être actionnée électriquement et qui est destinée à réguler la pression dans la chambre annulaire.

2. Système de suspension selon la revendication 1, **caractérisé en ce qu'**il est prévu un capteur de pression (78) destiné à détecter la pression dans la chambre annulaire et/ou un capteur de force, qui est destiné à détecter la charge axiale et dont les signaux sont pris en compte pour l'activation de la vanne à action proportionnelle (60, 80).

3. Système de suspension selon la revendication 1 ou 2, **caractérisé en ce que** la vanne à action proportionnelle (60, 80), en vue de son activation hydraulique, est sollicitée, d'une part, par la pression de son raccord (66, 86) du coté chambre annulaire et, d'autre part, par la pression de son raccord (68) du coté cuve.

4. Système de suspension selon l'une quelconque des revendications précédentes, **caractérisé en ce que** la première vanne magnétique (64, 82) remplit en position fermée une fonction de non retour, qui empêche un écoulement du liquide depuis la chambre annulaire (18, 20).

5. Système de suspension selon l'une quelconque des revendications précédentes, **caractérisé en ce que** la première vanne magnétique (82) en position fermée remplit deux fonctions de non retour qui empêchent un écoulement du liquide dans les deux directions.

6. Système de suspension selon l'une quelconque des revendications précédentes, **caractérisé en ce qu'**un obturateur (62) limitant l'écoulement est monté entre la première vanne magnétique (64) et la vanne à action proportionnelle (60).

7. Système de suspension selon l'une quelconque des revendications précédentes, **caractérisé en ce que** la vanne à action proportionnelle est une vanne de réglage proportionnel de la pression (60) activable par voie électromagnétique, **en ce que**, de préférence, la vanne de réglage proportionnel de la pression (60), à l'état hors courant, établit la liaison entre son raccord (66) du côté chambre annulaire et son raccord (68) du côté cuve (position cuve) et à l'état sollicité par le courant établit la liaison entre son raccord (44) du coté source de pression et le raccord (66) du côté chambre annulaire (position source de pression), et **en ce qu'**il peut être prévu un ressort de rappel (69) qui pousse la vanne de réglage proportionnel de la pression (60) dans sa position cuve.

8. Système de suspension selon la revendication 7, **caractérisé en ce que** la pression du côté chambre annulaire agit sur la vanne de réglage proportionnel de la pression (60) dans le même sens que la force du ressort de rappel (69) et **en ce que** la pression du côté cuve agit sur la vanne de réglage proportionnel de la pression (60) dans le même sens que la force électromagnétique (70).

9. Système de suspension selon l'une quelconque des revendications 1 à 6, **caractérisé en ce que** la vanne à action proportionnelle est une vanne de limitation proportionnelle de la pression (80) et **en ce que**, de préférence, la vanne de limitation proportionnelle de la pression (80) à l'état sollicité par le courant établit la liaison entre son raccord (86) du côté chambre annulaire et le raccord (68) du coté cuve (position cuve) et à l'état hors courant ferme la liaison (position de fermeture).

10. Système de suspension selon la revendication 9, **caractérisé en ce qu'**il est prévu un ressort de rappel (90), qui pousse la vanne de limitation proportionnelle de la pression (80) dans sa position de fermeture, **en ce que** de préférence la pression du côté cuve agit sur la vanne de limitation proportionnelle de la pression (80) dans le même sens que la force du ressort de rappel (90) et **en ce que** la pression du côté chambre annulaire agit sur la vanne de limitation proportionnelle de la pression (80) dans le même sens que la force électromagnétique (92).

11. Système de suspension selon la revendication 9 ou 10, **caractérisé en ce qu'**une conduite de pression (94) reliée à la source de pression (42) est montée en dérivation sur la conduite montée entre la vanne magnétique (82) et la vanne de limitation proportionnelle de la pression (80), **en ce qu'**un obturateur (96) est agencé de préférence dans la conduite de pression (94), et **en ce qu'**une deuxième vanne magnétique (97) peut être agencée dans la conduite de pression (94), laquelle vanne dans sa position fermée remplit une fonction de vanne de non retour qui empêche un écoulement du liquide depuis la source de pression (42).

12. Système de suspension selon l'une quelconque des revendications précédentes, **caractérisé en ce que** la source de pression comporte une pompe de détection de charge (42), dont le raccord de commande (43) communique via une conduite de commande (72) avec le raccord, orienté vers la vanne à action proportionnelle (60, 80), de la première vanne magnétique (64, 82), **en ce que** de préférence la conduite de commande (72) est reliée à la cuve via une zone d'obturation (99) et **en ce qu'**il peut être prévu une vanne à deux voies (48) dont le premier raccord d'admission est relié à la conduite de commande (72), dont le deuxième raccord d'admission est relié à une conduite de détection de charge (46) du côté chambre de piston et dont le raccord de sortie est relié au raccord de commande (43) de la pompe de détection de charge (42).
